Europäisches Patentamt

(19) European Patent Office

Office européen des brevets

(11) EP 0 763 878 A2

## (12) EUROPEAN PATENT APPLICATION

(43) Date of publication:
19.03.1997 Bulletin 1997/12

(51) Int. Cl.⁶: $H02J\ 9/06$

(21) Application number: 96114117.3

(22) Date of filing: 04.09.1996

(84) Designated Contracting States:
DE FR GB IT

(30) Priority: 18.09.1995 US 529481

(71) Applicant: THOMSON CONSUMER
ELECTRONICS, INC.
Indianapolis, IN 46206 (US)

(72) Inventor: Helfrich, Kenneth Jay
Fishers, IN 46038 (US)

(74) Representative: Ahrens, Thomas, Dipl.-Phys.
Deutsche Thomson-Brandt GmbH,
Licensing & Intellectual Property,
Göttinger Chaussee 76
30453 Hannover (DE)

### (54) Off-line phase control low-power power supply

(57) An unfiltered, full-wave rectified voltage waveform ($V_{REC}$) is fed to a power supply (10) having a switch device (Q1), which operates in fully conductive and non-conductive states, and to a reference voltage circuit (13). As the rectified voltage waveform drops below a threshold level, the reference voltage circuit biases a control circuit (12), thereby causing the switch device to begin conducting a current ($I_{OUT}$). The switch device continues conducting until the rectified voltage waveform exceeds the threshold level. The output voltage ($V_{OUT}$) is limited by resistive feedback (R6) coupled from the output of the power supply to the reference voltage circuit. The value of the resistance in the feedback path influences the threshold level and the peak amplitudes of the current pulses conducted by the switch device.

FIG. 1

## Description

This invention relates generally to the field of power supplies, and in particular, to standby power supplies used, for example, in television receivers.

A television receiver may be designed such that the television receiver's functions can be controlled by a viewer from a remote location using a hand-held, remote control apparatus. In order to permit the viewer to command the television receiver using the hand-held, remote control apparatus, the television receiver includes a standby power supply, which supplies power to the television receiver's microprocessor and to certain of its signal processing circuitry while the television receiver is in the "off" state.

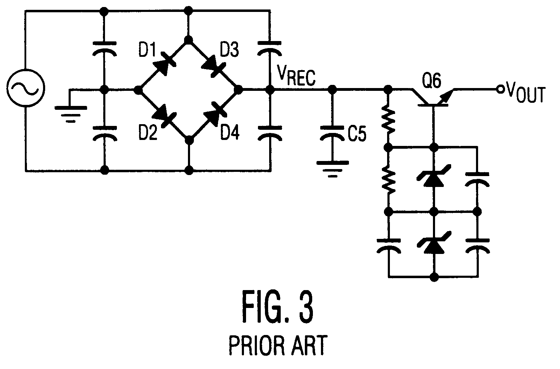

It is known in the art to use linear regulator circuits in standby power supplies. FIGURE 3 shows a schematic diagram of a typical prior art standby power supply which uses a linear regulator circuit. A source of AC input voltage is full-wave rectified by diodes D1, D2, D3 and D4 to provide a rectified voltage $V_{REC}$. Rectified voltage $V_{REC}$ is filtered by capacitor C5. Transistor Q6 forms a series pass element which receives rectified voltage $V_{REC}$ and provides an output voltage $V_{OUT}$. The conductivity of series pass element Q6 is adjusted so as to maintain a relatively constant output voltage $V_{OUT}$.

A disadvantage associated with the linear regulator circuit concerns the power dissipated as heat in series pass element Q6. Energy stored in capacitor C5 does not allow rectified voltage $V_{REC}$ to drop below output voltage $V_{OUT}$, and thereby prevents series pass element Q6 from turning "off". Series pass element Q6 operates in its linear region, and thus may have a substantial voltage drop from its input to its output. An output current flows through series pass element Q6 during the entire cycle of the AC input voltage. This combination of an output current flowing through a potentially sizable voltage drop may lead to high power dissipation in series pass element Q6.

A large power dissipation in series pass element Q6 is undesirable for at least two reasons. First, high power dissipation by series pass element Q6 causes the standby power supply to have a low efficiency; linear regulator circuits of the type shown in FIGURE 3 can have an efficiency as low as 10 per cent. Second, high power dissipation by series pass element Q6 may necessitate that series pass element Q6 be mounted on a heat sink, which uses up space on the power supply's circuit board, adds weight to the power supply and increases the cost of manufacturing the power supply.

Circuits employing phase control techniques can be used to overcome the drawbacks associated with the linear regulator circuit by controlling the amount of power delivered to a load. In a typical circuit utilizing phase control techniques, a silicon-controlled rectifier (SCR) is used to conduct a load current only during a portion of each positive half-cycle of AC input voltage. The SCR's gate electrode is usually triggered through a diac to ensure that the SCR does not conduct prematurely. If conduction is desired during a portion of both the positive and the negative half-cycles of AC input voltage, a triac can be used in place of the SCR.

A drawback to implementing phase control techniques using SCRs and triacs is that such an approach can result in high peak output currents. The use of a silicon-controlled rectifier permits only one current pulse during each cycle of AC input voltage; the use of a triac permits only two current pulses during each cycle of AC input voltage.

A power supply according to the inventive arrangements taught herein results in lower peak output currents and more current pulses during each cycle of AC input voltage than are currently associated with power supplies employing phase control techniques.

Such a power supply comprises: a source of unfiltered, rectified voltage potential; switching means coupled to the source for providing a regulated output voltage; means for generating a reference voltage potential coupled to the source; and, means for controlling operation of the switching means coupled to the generating means.

The switching means may conduct only after the rectified voltage potential falls below a threshold level, and the switching means may stop conducting after the rectified voltage potential rises above the threshold level.

The power supply may further comprise feedback means coupled from an output of the power supply to the generating means. The feedback means may comprise a resistance.

The power supply may provide four current pulses during each cycle of an alternating voltage potential.

According to a feature of an inventive arrangement taught herein, a power supply comprises: a source of rectified voltage potential; switching means which changes between non-conducting and fully conducting states responsive to the source of rectified voltage potential; means for generating a reference voltage potential coupled to the source; and, feedback means coupled from an output of the power supply to the generating means.

The power supply may provide four current pulses during each cycle of an alternating voltage potential.

The feedback means may comprise a resistance. A peak amplitude of the current pulses may be responsive to the resistance. A threshold level for the rectified voltage potential may be responsive to the resistance.

The switching means may be in a non-conducting state when the rectified input voltage is above the threshold level. The switching means may be in a fully conducting state when the rectified input voltage is below the threshold level.

The above, and other features and advantages of the present invention, will become apparent from the following description read in conjunction with the accompanying drawings, in which like reference numerals designate the same elements.

FIGURE 1 is a schematic diagram of a preferred embodiment of an inventive arrangement taught herein.

FIGURE 2 is a schematic diagram of another preferred embodiment of an inventive arrangement taught herein.

FIGURE 3 is a schematic diagram of a prior art standby power supply.

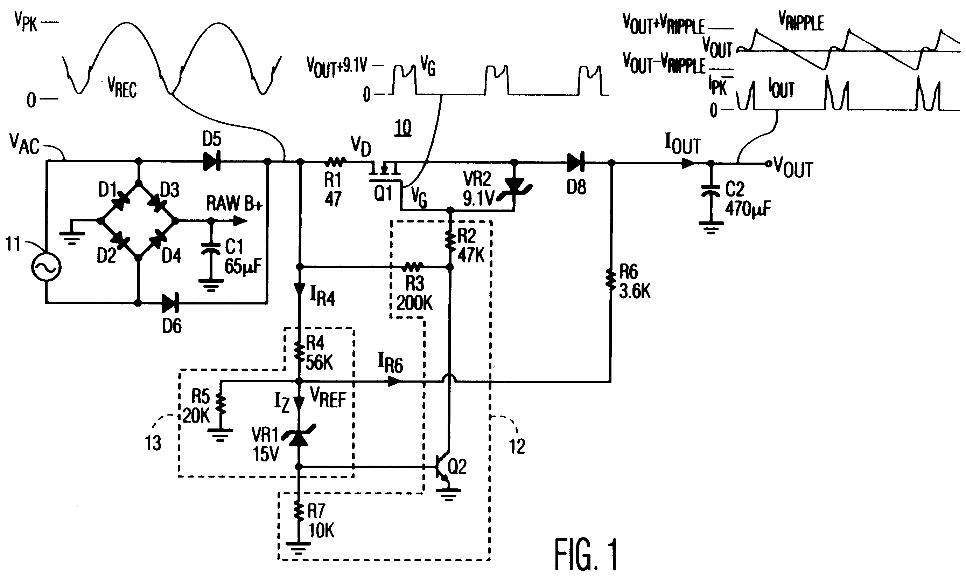

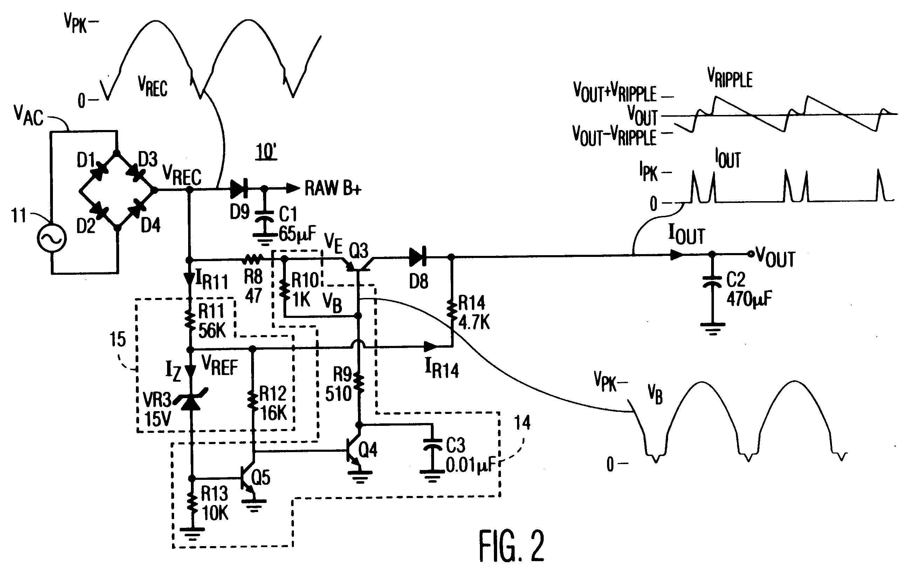

Power supplies 10 and 10' are shown in FIGURES 1 and 2, respectively. Each power supply accepts an AC voltage potential $V_{AC}$ from a source of alternating voltage potential 11. The AC voltage potential $V_{AC}$ typically has a peak voltage $V_{PK}$ between 30 volts and 270 volts and operates at a frequency greater than or equal to about 50 Hz. Power supply 10 provides a DC output power at an output voltage $V_{OUT}$, for example between 15 and 17 volts, and a nominal output current $I_{OUT}$, for example up to 60 mA.

Referring to FIGURE 1, source of alternating voltage potential 11 has a first terminal coupled to an anode of diode D5 and a second terminal coupled to an anode of diode D6. The cathodes of diodes D5 and D6 are coupled to one another. The AC voltage potential $V_{AC}$ is full-wave rectified by diodes D5 and D6 to provide a rectified voltage $V_{REC}$ at the cathodes of diodes D5 and D6. Rectified voltage $V_{REC}$ is not filtered by an input filter.

In the embodiment shown in FIGURE 1, a switch device Q1 may comprise, for example, an enhancement-type, n-channel, metal-oxide semiconductor field-effect transistor (MOSFET). A resistor R1 has a first terminal coupled to the cathodes of diodes D5 and D6 and a second terminal coupled to a drain electrode of switch device Q1. A voltage regulator VR2 has a cathode coupled to a gate electrode of switch device Q1 and an anode coupled to a source electrode of switch device Q1. Voltage regulator VR2 is, for example, a Zener diode having a reverse breakdown voltage equal to 9.1 volts. The source electrode of switch device Q1 is also coupled to an anode of a diode D8.

A control circuit 12 for switch device Q1 may generally comprise resistors R2, R3 and R7, and a transistor Q2. A first terminal of resistor R2 is coupled to the gate electrode of switch device Q1. A first terminal of resistor R3 is coupled to the cathodes of diodes D5 and D6, and a second terminal of resistor R3 is coupled to a second terminal of resistor R2. The second terminals of resistors R2 and R3 are coupled to a collector electrode of transistor Q2. An emitter electrode of transistor Q2 is coupled to a source of power supply reference potential, for example, ground. A base electrode of transistor Q2 is coupled to a first terminal of resistor R7, and a second terminal of resistor R7 is coupled to the source of power supply reference potential.

A reference voltage circuit 13 may generally comprise a reference voltage regulator VR1 and resistors R4 and R5. Reference voltage regulator VR1 is, for example, a Zener diode having a reverse breakdown voltage equal to 15 volts. An anode of reference voltage regulator VR1 is coupled to the base electrode of transistor Q2. A cathode of reference voltage regulator VR1 is coupled to a first terminal of resistor R5. A second terminal of resistor R5 is coupled to the source of power supply reference potential. A resistor R4 has a first terminal coupled to the cathode of reference voltage regulator VR1 and a second terminal coupled to the cathodes of diodes D5 and D6.

Resistor R6 couples reference voltage $V_{REF}$ at the cathode of reference voltage regulator VR1 to output voltage $V_{OUT}$ at a cathode of diode D8. A capacitor C2 has a first terminal coupled to a cathode of diode D8 and a second terminal coupled to the source of power supply reference potential.

Referring again to FIGURE 1, in understanding the operation of power supply 10 it is helpful to assume initially that power supply 10 is operated in an open-loop configuration, that is, resistor R6 is replaced by an open circuit. It may also be helpful to assume initially that rectified voltage $V_{REC}$ is at its peak voltage $V_{PK}$.

A voltage divider network formed by resistors R4 and R5 divides rectified voltage $V_{REC}$ such that the voltage at the cathode of reference voltage regulator VR1 is approximately equal to

$$V_{REC} * (\frac{R5}{R4+R5}).$$

When rectified voltage $V_{REC}$ is at its peak voltage $V_{PK}$, a reverse breakdown voltage of reference voltage regulator VR1 is exceeded and reference voltage regulator VR1 has a substantially constant voltage drop of 15 volts from its cathode to its anode. A current $I_Z$ flows through reference voltage regulator VR1 and into the base electrode of transistor Q2, so that transistor Q2 is conductive and the gate electrode of switch device Q1 is coupled to the source of power supply reference potential through resistor R2 of control circuit 12. Switch device Q1 is thus non-conductive and cannot conduct output current $I_{OUT}$.

It may now be helpful to recall that power supply 10 has a closed-loop configuration, that is, resistor R6 couples reference voltage $V_{REF}$ at the cathode of reference voltage regulator VR1 to output voltage $V_{OUT}$ at a cathode of diode D8.

The output voltage $V_{OUT}$ at the cathode of diode D8 is equal to the sum of the reverse breakdown voltage across reference voltage regulator VR1, the voltage between the base and emitter electrodes of transistor Q2 and a ripple voltage component $V_{RIPPLE}$. The ripple voltage component $V_{RIPPLE}$ of output voltage $V_{OUT}$ arises from the periodic charging and discharging of capacitor C2. Ripple voltage $V_{RIPPLE}$ reaches a positive peak value of approximately 0.5 volts during the time that output current $I_{OUT}$ is charging capacitor C2. Conversely, ripple voltage $V_{RIPPLE}$ reaches a negative peak value of approximately -0.5 volts during the time that switch device Q1 is not conducting output current $I_{OUT}$ and capacitor C2 is discharging into a load.

As rectified voltage $V_{REC}$ decreases from its peak voltage $V_{PK}$, reference voltage $V_{REF}$ maintains a value that is substantially equal to the reverse breakdown voltage of reference voltage regulator VR1 plus the voltage between the base and emitter electrodes of transistor Q2. Therefore, a current $I_{R4}$ through resistor R4 decreases.

As current $I_{R4}$ is decreasing, a current $I_{R6}$ through resistor R6 is increasing. As rectified voltage $V_{REC}$ is decreasing from its peak voltage $V_{PK}$, switch device Q1 is non-conductive and output current $I_{OUT}$ is not charging capacitor C2. The load is discharging capacitor C2, and ripple voltage $V_{RIPPLE}$ is approaching its negative peak value. As a result, output voltage $V_{OUT}$ is decreasing and current $I_{R6}$ is thus increasing.

Since current $I_{R4}$ is decreasing, the increase in current $I_{R6}$ must come at the expense of current $I_Z$ flowing through reference voltage regulator VR1. As current $I_{R6}$ increases, current $I_Z$ decreases proportionally, until it finally reaches zero. At this point, rectified voltage $V_{REC}$ is at a threshold level. Transistor Q2 becomes non-conductive because current $I_Z$ is zero, and rectified voltage $V_{REC}$ is coupled to the gate electrode of switch device Q1 through resistor R3 of control circuit 12, thereby causing switch device Q1 to become fully conductive. Voltage regulator VR2 clamps gate voltage $V_G$ of switch device Q1 to a level that is 9.1 volts above the output voltage $V_{OUT}$. Diode D8 is forward biased since rectified voltage $V_{REC}$ exceeds output voltage $V_{OUT}$, and, consequently, switch device Q1 conducts output current $I_{OUT}$.

Switch device Q1 continues conducting output current $I_{OUT}$ until rectified voltage $V_{REC}$ decreases below the level of output voltage $V_{OUT}$. Output voltage $V_{OUT}$ is coupled to the drain electrode of switch device Q1 through resistors R1, R4 and R6. When rectified voltage $V_{REC}$ drops below output voltage $V_{OUT}$, which is possible because of the absence of an input filter capacitor that would otherwise hold rectified voltage $V_{REC}$ up at a much higher level, a drain voltage $V_D$ becomes approximately equal to the output voltage $V_{OUT}$. As a result, switch device Q1 temporarily discontinues conducting output current $I_{OUT}$, thereby minimizing power dissipation in resistor R1.

As rectified voltage $V_{REC}$ increases toward its peak voltage $V_{PK}$, it passes the level of output voltage $V_{OUT}$. Diode D6 becomes forward biased and the drain voltage $V_D$ of switch device Q1 rises. Switch device Q1 then resumes conducting output current $I_{OUT}$. Voltage regulator VR2 remains reverse biased until gate voltage $V_G$ exceeds output voltage $V_{OUT}$ by the reverse breakdown voltage of voltage regulator VR2, at which point voltage regulator VR2 clamps gate voltage $V_G$ of switch device Q1 to a level that is 9.1 volts above the output voltage $V_{OUT}$.

When rectified voltage $V_{REC}$ again reaches the threshold level, the reverse breakdown voltage of reference voltage regulator VR1 is exceeded and reference voltage regulator VR1 maintains a substantially constant voltage drop of 15 volts from its cathode to its anode. Current $I_Z$ flows through reference voltage regulator VR1 and into the base electrode of transistor Q2, causing transistor Q2 to become conductive, and thereby pulling the gate electrode of switch device Q1 to the source of power supply reference potential through resistor R2 of control circuit 12 and causing switch device Q1 to become non-conductive.

This process repeats itself for each cycle of AC voltage potential $V_{AC}$. Four current pulses are produced during each cycle of AC voltage potential $V_{AC}$ because transistor Q2 remains non-conductive throughout the time that rectified voltage $V_{REC}$ remains below the threshold level. This allows switch device Q1 to resume conducting output current $I_{OUT}$ once rectified voltage $V_{REC}$ exceeds the level of output voltage $V_{OUT}$ as rectified voltage $V_{REC}$ increases toward its peak voltage $V_{PK}$.

In the embodiment of FIGURE 1, switch device Q1 can be operated without having to be mounted on a heat sink. The power dissipation associated with output current $I_{OUT}$ occurs primarily in resistor R1 because switch device Q1 is in a fully conductive state when it is conducting output current $I_{OUT}$.

Power supply 10', shown in FIGURE 2, is an alternative embodiment for power supply 10. In power supply 10', a switch device Q3 may comprise, for example, a PNP-type, bipolar junction transistor (BJT). Switch device Q3 corresponds in function to switch device Q1 of FIGURE 1.

Referring to FIGURE 2, the AC voltage potential $V_{AC}$ provided by source of alternating voltage potential 11 is full-wave rectified by diodes D1, D2, D3 and D4 to provide rectified voltage $V_{REC}$ at the cathodes of diodes D3 and D4. As in the MOSFET embodiment of FIGURE 1, rectified voltage $V_{REC}$ is not filtered by an input filter. Diode D9 conducts when rectified voltage $V_{REC}$ exceeds a RAW $B^+$ voltage.

Resistor R8, which corresponds in function to resistor R1 of FIGURE 1, has a first terminal coupled to the cathodes of diodes D3 and D4 and a second terminal coupled to an emitter electrode of switch device Q3. A collector electrode of switch device Q3 is coupled to the anode of diode D8, which performs the same function in both of the embodiments shown in FIGURES 1 and 2.

A control circuit 14 for switch device Q3 may generally comprise resistors R9, R10 and R13, and transistors Q4 and Q5. Control circuit 14 corresponds in function to control circuit 12 of FIGURE 1. Transistor Q5 is necessary in control circuit 14 only because of the base current requirements of PNP-type BJTs. A first terminal of resistor R9 is coupled to a base electrode of switch device Q3. A first terminal of resistor R10 is coupled to the emitter electrode of switch device Q3, and a second terminal of resistor R10 is coupled to the first terminal of resistor R9. A second terminal of resistor R9 is coupled to a collector electrode of transistor Q4. An emitter electrode of transistor Q4 is coupled to a source of power supply reference potential, for example, ground. A collector electrode of transistor Q5 is coupled to a base electrode of transistor Q4. A base electrode of transistor Q5 is coupled to a first terminal of resistor R13. A second terminal of resistor R13 and an emitter electrode of transistor Q5 are coupled to the source of power supply reference potential.

A reference voltage circuit 15, which corresponds in function to reference voltage circuit 13 of FIGURE 1, may generally comprise a reference voltage regulator VR3 and resistors R11 and R12. Reference voltage regulator VR3 is, for example, a Zener diode having a reverse breakdown voltage equal to 15 volts. An anode of reference voltage regulator VR3 is coupled to the base electrode of transistor Q5. A cathode of reference voltage regulator VR3 is coupled to a first terminal of resistor R12. A second terminal of resistor R12 is coupled to the collector electrode of transistor Q5. Resistor R11 has a first terminal coupled to the cathode of reference voltage regulator VR3 and a second terminal coupled to the cathodes of diodes D3 and D4.

Resistor R14, which corresponds in function to resistor R6 of FIGURE 1, couples reference voltage $V_{REF}$ at the cathode of reference voltage regulator VR3 to output voltage $V_{OUT}$ at the cathode of diode D8. Capacitor C2, which performs the same function in both of the embodiments shown in FIGURES 1 and 2, has a first terminal coupled to a cathode of diode D8 and a second terminal coupled to the source of power supply reference potential.

Referring again to FIGURE 2, in understanding the operation of power supply 10' it is helpful to assume initially that power supply 10' is operated in an open-loop configuration, that is, resistor R14 is replaced by an open circuit. It may also be helpful to assume initially that rectified voltage $V_{REC}$ is at its peak voltage $V_{PK}$.

A voltage divider network formed by resistors R11 and R12 divides rectified voltage $V_{REC}$ such that the voltage at the cathode of reference voltage regulator VR3 is approximately equal to

$$V_{REC} * \left(\frac{R12}{R11+R12}\right).$$

When rectified voltage $V_{REC}$ is at its peak voltage $V_{PK}$, a reverse breakdown voltage of reference voltage regulator VR3 is exceeded and reference voltage regulator VR3 has a substantially constant voltage drop of 15 volts from its cathode to its anode. A current $I_Z$ flows through reference voltage regulator VR3 and into the base electrode of transistor Q5, causing transistor Q5 to become conductive. The base electrode of transistor Q4 is thereby coupled to the source of power supply reference potential. Transistor Q4 thus becomes non-conductive, causing switch device Q3 to become non-conductive.

It may now be helpful to recall that power supply 10' has a closed-loop configuration, that is, resistor R14 couples reference voltage $V_{REF}$ at the cathode of reference voltage regulator VR3 to output voltage $V_{OUT}$ at the cathode of diode D8.

The output voltage $V_{OUT}$ at the cathode of diode D8 is equal to the sum of the reverse breakdown voltage across reference voltage regulator VR3, the voltage between the base and emitter electrodes of transistor Q5 and a ripple voltage component $V_{RIPPLE}$. The ripple voltage component $V_{RIPPLE}$ of output voltage $V_{OUT}$ arises from the periodic charging and discharging of capacitor C2. Ripple voltage $V_{RIPPLE}$ reaches a positive peak value of approximately 0.5 volts during the time that output current $I_{OUT}$ is charging capacitor C2. Conversely, ripple voltage $V_{RIPPLE}$ reaches a negative peak value of approximately -0.5 volts during the time that switch device Q3 is not conducting output current $I_{OUT}$ and capacitor C2 is discharging into a load.

As rectified voltage $V_{REC}$ decreases from its peak voltage $V_{PK}$, reference voltage $V_{REF}$ maintains a value that is substantially equal to the reverse breakdown voltage of reference voltage regulator VR3 plus the voltage between the base and emitter electrodes of transistor Q5. Therefore, a current $I_{R11}$ through resistor R11 decreases.

As current $I_{R11}$ is decreasing, a current $I_{R14}$ through resistor R14 is increasing. As rectified voltage $V_{REC}$ is decreasing from its peak voltage $V_{PK}$, switch device Q3 is non-conductive and output current $I_{OUT}$ is not charging capacitor C2. The load is discharging capacitor C2, and ripple voltage $V_{RIPPLE}$ is approaching its negative peak value. As a result, output voltage $V_{OUT}$ is decreasing and current $I_{R14}$ is thus increasing.

Since current $I_{R11}$ is decreasing, the increase in current $I_{R14}$ must come at the expense of current $I_Z$ flowing through reference voltage regulator VR3. As current $I_{R14}$ increases, current $I_Z$ decreases proportionally, until it finally reaches zero. At this point, rectified voltage $V_{REC}$ is at a threshold level. Transistor Q5 becomes non-conductive because current $I_Z$ is zero, and rectified voltage $V_{REC}$ is coupled to the base electrode of transistor Q4 through resistors R11 and R12, thereby causing transistor Q4 to become conductive. Switch device Q3 becomes fully conductive due to an increase in a current flowing from its base electrode to the source of power supply reference potential through transistor Q4. Diode D8 is forward biased since rectified voltage $V_{REC}$ exceeds output voltage $V_{OUT}$, and, consequently, switch device Q3 conducts output current $I_{OUT}$.

Switch device Q3 continues conducting output current $I_{OUT}$ until rectified voltage $V_{REC}$ decreases below the level of output voltage $V_{OUT}$. When rectified voltage $V_{REC}$ drops below output voltage $V_{OUT}$, which is possible because of the absence of an input filter capacitor that would otherwise hold rectified voltage $V_{REC}$ up at a much higher level, an emitter voltage $V_E$ becomes approximately equal to the sum of the voltage between the collector and emitter electrodes of transistor Q4 and the voltage between the emitter and base electrodes of switch device Q3. As a result, switch device Q3 temporarily discontinues conducting output current $I_{OUT}$, thereby minimizing power dissipation in resistor R8.

As rectified voltage $V_{REC}$ increases toward its peak voltage $V_{PK}$, it passes the level of output voltage $V_{OUT}$, and switch device Q3 resumes conducting output current $I_{OUT}$. When rectified voltage $V_{REC}$ again reaches the threshold level, the reverse breakdown voltage of reference voltage regulator VR3 is exceeded and reference voltage regulator VR3 maintains a substantially constant voltage drop of 15 volts from its cathode to its anode. Current $I_Z$ flows through reference voltage regulator VR3 and into the base electrode of transistor Q5, causing transistor Q5 to become conductive, and thereby pulling the base electrode of transistor Q4 to the source of power supply reference potential. Transistor Q4 thus becomes non-conductive, causing switch device Q3 to become non-conductive.

This process repeats itself for each cycle of the AC voltage potential $V_{AC}$. Four current pulses are produced during each cycle of AC voltage potential $V_{AC}$ because transistor Q4 remains conductive throughout the time that rectified voltage $V_{REC}$ remains below the threshold level. This allows switch device Q3 to resume conducting output current $I_{OUT}$ once rectified voltage $V_{REC}$ exceeds the level of output voltage $V_{OUT}$ as rectified voltage $V_{REC}$ increases toward its peak voltage $V_{PK}$.

In the embodiment of FIGURE 2, switch device Q3 can be operated without having to be mounted on a heat sink. The power dissipation associated with output current $I_{OUT}$ occurs primarily in resistor R8 because switch device Q3 is in a fully conductive state when it is conducting output current $I_{OUT}$.

A value for resistors R6 and R14 in FIGURES 1 and 2, respectively, can be chosen in order to achieve a desired threshold level for rectified voltage $V_{REC}$. A particular threshold level may be desirable because of its effect on a peak amplitude $I_{PK}$ of output current $I_{OUT}$. In the extreme case, where resistors R6 and R14 are each replaced by a short circuit, all power is delivered to the load by a single current pulse. This leads to more power being dissipated by each power supply because the single current pulse necessarily has a high peak amplitude.

Adjusting the values of R6 and R14 allows the relative amplitudes of adjacent current pulses of output current $I_{OUT}$ to be approximately equalized so that the power dissipated by power supplies 10 and 10', respectively, may be minimized. Specifically, as the values of resistors R6 and R14 are increased, current $I_Z$ through reference voltage regulators VR1 and VR3 in FIGURES 1 and 2, respectively, reaches zero at a lower threshold level. This, in turn, causes switch devices Q1 and Q3 to begin conducting output current $I_{OUT}$ at a lower value of rectified voltage $V_{REC}$ than would be the case with lower values for resistors R6 and R14.

A value for resistors R6 and R14 may thus be chosen such that the relative amplitudes of adjacent current pulses of output current $I_{OUT}$ may be approximately equalized. Referring to FIGURE 1, with resistor R6 equal to 3.6 k$\Omega$, the relative amplitudes of adjacent current pulses of output current $I_{OUT}$ are unequal. A first current pulse has a peak amplitude which is equal to the peak amplitude $I_{PK}$ of the output current $I_{OUT}$, which is approximately equal to 0.75 A in FIGURE 1. A second, adjacent current pulse then has an amplitude that is less than the peak amplitude $I_{PK}$ of output current $I_{OUT}$ because power supply 10 provides a constant output power, and thus the second, adjacent current pulse need only supply whatever power was not supplied by the first current pulse. In FIGURE 1, the second, adjacent current pulse has an amplitude which is approximately equal to 0.65 A.

Referring to FIGURE 2, with R14 equal to 4.7 k$\Omega$, the relative amplitudes of adjacent current pulses of output current $I_{OUT}$ are approximately equal. Both adjacent current pulses of output current $I_{OUT}$ of power supply 10' have an amplitude which is approximately equal to the peak amplitude $I_{PK}$ of output current $I_{OUT}$. In FIGURE 2, both adjacent current pulses have an amplitude which is approximately equal to 0.7 A. As a result, each adjacent current pulse supplies a relatively equal amount of power to the load.

It can be seen that the MOSFET embodiment and the PNP embodiment share certain structural and functional characteristics. In each embodiment, a transistor switch device is driven between the non-conductive and fully conductive states by a control circuit comprising a plurality of resistors and at least one active device. The control circuits in each embodiment drive their respective switch devices into the fully conductive state once an unfiltered, full-wave rectified waveform drops below a threshold voltage level, which is set in each embodiment by a reference voltage circuit comprising a voltage divider network and a Zener diode. The switch device remains in the fully conductive state until the unfiltered, full-wave rectified voltage waveform exceeds the threshold level, at which point the control circuits in each embodiment drive their respective switch devices into the non-conductive state. The output voltage in each embodiment is determined by a resistive feedback connection from the power supply's output to its reference voltage circuit. In each embodiment, the power supply provides four current pulses during each cycle of the source of alternating voltage potential. The peak amplitudes of the current pulses in each embodiment can be controlled by the selection of a resistance value for the feedback connection.

**Claims**

1.  A power supply, comprising:

    a source ($V_{REC}$) of rectified voltage potential; and,
    means (13) for generating a reference voltage potential coupled to said source;

    characterized by:

    said source being unfiltered;
    switching means (Q1) coupled to said source for providing a regulated output voltage ($V_{OUT}$); and,

means (12) for controlling operation of said switching means coupled to said generating means.

2. The power supply of claim 1, characterized in that said switching means (Q1) conducts only after said rectified voltage potential falls below a threshold level.

3. The power supply of claim 2, characterized in that said switching means (Q1) stops conducting after said rectified voltage potential rises above said threshold level.

4. The power supply of claim 1, wherein said switching means (Q1) is characterized by a field-effect transistor.

5. The power supply of claim 4, wherein said controlling means (12) is characterized by a transistor (Q2) having a collector electrode coupled to a gate electrode of said field-effect transistor, a base electrode coupled to said generating means (13) and an emitter electrode coupled to a source (GROUND) of power supply reference potential.

6. The power supply of claim 5, wherein said generating means (13) is characterized by:

    a Zener diode (VR1) having an anode coupled to said base electrode of said transistor (Q2) and a cathode; and,
    a voltage divider network (R4, R5) having an input coupled to said source ($V_{REC}$) of rectified voltage potential and an output coupled to said cathode of said Zener diode.

7. The power supply of claim 1, wherein said switching means is characterized by a bipolar-junction transistor.

8. The power supply of claim 7, wherein said controlling means is characterized by:

    a first transistor having a collector electrode coupled to a base electrode of said switching means and an emitter electrode coupled to a source of power supply reference potential; and,
    a second transistor having a collector electrode coupled to a base electrode of said first transistor, a base electrode coupled to said generating means and an emitter electrode coupled to said source of power supply reference potential.

9. The power supply of claim 8, wherein said generating means is characterized by:

    a Zener diode having an anode coupled to said base electrode of said second transistor and a cathode; and,
    a voltage divider network having an input coupled to said source of rectified voltage potential and an output coupled to said cathode of said Zener diode.

10. The power supply of claim 1, further characterized by feedback means (R6) coupled from an output of said power supply to said generating means (13).

11. The power supply of claim 10, characterized in that said power supply provides four current pulses during each cycle of an alternating voltage potential.

12. The power supply of claim 10, wherein said feedback means (R6) is characterized by a resistance.

13. A power supply, comprising:

    a source ($V_{REC}$) of rectified voltage potential; and,
    means (13) for generating a reference voltage potential coupled to said source;

    characterized by:

    switching means (Q1) which changes between non-conducting and fully conducting states responsive to said rectified voltage potential; and,
    feedback means (R6) coupled from an output of said power supply to said generating means.

14. The power supply of claim 13, characterized in that said switching means (Q1) is in a non-conducting state when said rectified input voltage is above a threshold level.

15. The power supply of claim 14, characterized in that said switching means (Q1) is in a fully conducting state when said rectified input voltage is below said threshold level.

16. The power supply of claim 15, wherein said feedback means (R6) is characterized by a resistance.

17. The power supply of claim 16, characterized in that said threshold voltage level is responsive to said resistance.

18. The power supply of claim 16, characterized in that said power supply provides four current pulses during each cycle of an alternating voltage potential.

19. The power supply of claim 18, characterized in that peak amplitudes of said current pulses are responsive to said resistance.

FIG. 1

EP 0 763 878 A2

FIG. 2

# FIG. 3
## PRIOR ART